# EUROPÄISCHE PATENTSCHRIFT

(11) **EP 2 300 270 B1**
(45) Veröffentlichungstag und Bekanntmachung des Hinweises auf die Patenterteilung: **25.04.2012**
(21) Anmeldenummer: 09768926.9
(22) Anmeldetag: 16.06.2009
(51) Int. Cl.: B60R 13/04, B60R 13/06, B60R 13/07

(54) **ANBAUTEIL FÜR EIN FAHRZEUG UND VERFAHREN ZUR HERSTELLUNG EINES ANBAUTEILS**
ACCESSORY FOR A VEHICLE AND METHOD FOR PRODUCING AN ACCESSORY
PIECE A RAPPORTER POUR VEHICULE ET PROCEDE DE REALISATION D'UNE PIECE A RAPPORTER

(30) Priorität: 18.06.2008 DE 102008028599
(43) Veröffentlichungstag der Anmeldung: 30.03.2011
(73) Patentinhaber: Rehau AG + Co, 95111 Rehau (DE)
(72) Erfinder: SCHMIDT, Udo, 95030 Hof (DE); GRUBER, Steffen, 95111 Rehau (DE)
(86) Internationale Anmeldenummer: PCT/EP2009/004323
(87) Internationale Veröffentlichungsnummer: WO 2009/156077

(56) Entgegenhaltungen:
- EP-A1- 0 799 748
- FR-A1- 2 680 737
- FR-A1- 2 731 664
- US-A1- 2006 175 855

## Beschreibung

Die Erfindung betrifft ein Anbauteil zur Befestigung im Außenbereich oder im Innenraum eines Fahrzeugs. Derartige Anbauteile an Fahrzeugen können verschiedene Funktionen erfüllen. Insbesondere im Außenbereich von Fahrzeugen bzw. Kraftfahrzeugen besteht eine mögliche Funktion von Anbauteilen darin, die Aerodynamik des Fahrzeugs zu verbessern oder auch zum Wassermanagement des Fahrzeugs beizutragen, d. h. Spritzwasser oder Regenwasser in Bereiche auf der Fahrzeugaußenhaut zu leiten, in denen das Wasser abfließen kann, ohne die Rundumsicht eines Fahrzeugführers zu beeinträchtigen. Daneben werden derartige Anbauteile zum Toleranzausgleich in Fugen, beispielsweise Dachfugen, und auch zum Kaschieren von Fugen verwendet.

Ein Beispiel für ein Anbauteil für Fahrzeuge wird in der deutschen Patentanmeldung DE 10 2004 060 500 A1 beschrieben. Die in der genannten Schrift offenbarte Wasserfangleiste ist dazu vorgesehen, zwischen einer A-Säule und einer Frontscheibe eines Kraftfahrzeugs angebracht zu werden und dient dem Ableiten von Wasser aus den seitlichen Bereichen der Frontscheibe und dabei insbesondere dazu, das abgeleitete Wasser von den Seitenscheiben fernzuhalten, um die Rundumsicht des Fahrers nicht zu beeinträchtigen. Daneben muss bei der Gestaltung der beschriebenen Wasserfangleiste noch den aerodynamischen Erfordernissen Rechnung getragen werden, um Fahrwindgeräusche so gering wie möglich zu halten. Da es sich bei der Wasserfangleiste um ein von außen sichtbares Teil handelt, muss darüber hinaus noch Sorge dafür getragen werden, dass das optische Gesamterscheinungsbild des Fahrzeugs durch die Wasserfangleiste nicht beeinträchtigt wird bzw. die Optik des Fahrzeugs eventuell sogar durch eine optisch ansprechende Gestaltung der Wasserfangleiste verbessert wird.

**Das Dokument** EP 0 799 748 A1 **offenbart eine gattungsgemäße Wasserfangleiste. Nachteilig ist jedoch, dass die Abdichtungselemente zwischen dem Karosserierahmen und z.B. der Windschutzscheibe eines Fahrzeuges eine komplexe Geometrie der elastischen Komponente bzw. Dichtlippe aufweist und die Abdeckleiste den Dichtungskörper funktionsbedingt nur teilweise verdecken kann.**

Bei der Gestaltung der genannten Wasserfangleiste ist also ein Kompromiss zwischen technischer Funktion wie Ableitung von Wasser und Aerodynamik auf der einen Seite und Design auf der anderen Seite einzugehen; darüber hinaus ist zu berücksichtigen, dass die Wasserfangleiste produktionstechnisch mit vertretbarem Aufwand hergestellt werden kann.

Aufgabe der vorliegenden Erfindung ist es, ein Anbauteil für Fahrzeuge anzugeben, das produktionstechnisch einfach herstellbar ist, hohes Potenzial für eine optisch ansprechende Gestaltung zeigt sowie die technischen Anforderungen an seine gewünschte Funktionalität möglichst optimal erfüllt.

Diese Aufgabe wird gelöst durch ein Anbauteil mit den Merkmalen des Patentanspruchs 1 . Die Unteransprüche beziehen sich auf vorteilhafte Ausführungsformen und Weiterbildungen der Erfindung.

Das erfindungsgemäße Anbauteil zur Befestigung im Außenbereich oder im Innenraum von Fahrzeugen ist zweiteilig aus einem Grundkörper und einer an dem Grundkörper befestigten Blende ausgeführt. Diese zweiteilige Ausführung des Anbauteils aus Grundkörper und Blende erlaubt es, den Grundkörper und die Blende jeweils für sich auf die jeweiligen - unterschiedlichen -Anforderungen hin zu optimieren. So kann beispielsweise die Blende derart ausgeführt werden, dass sie entweder mittels eines Folienhinterspritzverfahrens hergestellt wird oder auch spritzgegossen und anschließend lackiert wird. Die Erfindung ermöglicht es damit, für die Blende weit mehr Designvarianten vorzusehen, als es bei einer einteiligen Ausführung des Anbauteils der Fall wäre. Im Fall einer einteiligen Ausführung des Anbauteils müsste bei der Oberflächengestaltung der sichtbaren Teile des Anbauteils berücksichtigt werden, dass das Anbauteil Funktionsteile aufweist, denen ein Lackiervorgang schaden würde. Damit müssten die gesamten Funktionselemente vor einem Lackierprozess aufwändig maskiert und nach dem Aufbringen des Lacks wieder demaskiert werden, was die Herstellung erheblich verteuern würde.

Daneben eröffnet die Trennung des erfindungsgemäßen Anbauteils in Blende und Grundkörper die Möglichkeit, für denselben Grundkörper eine Mehrzahl passender Blenden unterschiedlichen Designs bereitzustellen, wodurch sich insgesamt die Designvielfalt für den Fahrzeugtyp, für den der erfindungsgemäße Grundkörper vorgesehen ist, erheblich erhöht. Dadurch, dass die Blende lösbar, insbesondere verrastbar, an dem Grundkörper ausgeführt ist, eröffnet sich darüber hinaus die Möglichkeit, auch bei bereits ausgelieferten Fahrzeugen nachträglich das optische Erscheinungsbild durch einen einfachen Wechsel der Blende zu ändern, wodurch sich der Kundennutzen und damit die Attraktivität des Fahrzeugs für die möglichen Kundenkreise weiter erhöht.

Es ist daneben auch denkbar, die Blende mit dem Grundkörper zu verklemmen oder dauerhaft, beispielsweise durch ein Klebe- oder Schweißverfahren zu verbinden.

Der Grundkörper selbst kann dabei in der Weise ausgeführt werden, dass er seinerseits mit dem Fahrzeug verklebt werden kann. Auch andere Befestigungsformen des Grundkörpers mit dem Fahrzeug, wie beispielsweise Verclipsen, Vernieten, Verschweißen, Verschrauben oder Verklemmen sind denkbar.

Ein weiteres Merkmal des erfindungsgemäßen Grundkörpers besteht darin, dass er mindestens eine starre und mindestens eine elastische Komponente, beispielsweise eine oder mehrere Dichtlippen, aufweist. Die starre Komponente kann dabei aus einem polymeren Material gebildet sein und insbesondere zur weiteren Stabilisierung Fasern, wie beispielsweise Glasfasern oder auch mineralische Fasern, enthalten.

Die elastische Komponente kann insbesondere als Dichtlippe zum Abdichten von Bereichen der Fahrzeugaußenhaut gegen den Innenraum oder gegeneinander oder auch zur Realisierung eines Toleranzausgleichs ausgebildet sein.

Eine weitere vorteilhafte Implikation der Erfindung besteht darin, dass die Blende für die Fälle, in denen sie lackiert werden soll, mit Halteelementen zur Halterung während des Lackiervorgangs versehen sein kann, so dass es keiner zusätzlicher Adapter oder Ähnlichem für den Lackiervorgang bedarf; hierdurch wird ein weiterer produktionstechnischer Vorteil durch das erfindungsgemäße Anbauteil realisiert.

Bei dem Anbauteil kann es sich um sämtliche Arten von Anbauteilen im Innenraum oder auch im Außenbereich von Fahrzeugen handeln, wie beispielsweise Dachfugenleisten oder Wasserfangleisten.

Das erfindungsgemäße Anbauteil wird durch ein Verfahren hergestellt, das die Schritte
- Herstellen eines Grundkörpers
- Herstellen einer Blende
- Zusammenfügen des Grundkörpers mit der Blende
umfasst. Dabei kann der Grundkörper als zweikomponentiger Körper mit einer harten und einer elastischen Komponente, beispielsweise mittels eines Spritzgieß- oder eines Extrusionsverfahrens, hergestellt sein.

Die Blende kann ebenso durch ein Spritzgieß- oder ein Extrusionsverfahren hergestellt werden.

Daneben ist es denkbar, die Blende mittels eines Folienhinterspritzverfahrens herzustellen oder auch, in Fällen, in denen die Blende als Spritzgussteil hergestellt wurde, diese vor dem Zusammenfügen der Blende mit dem Grundkörper zu lackieren. Dabei können die bereits vorstehend geschilderten Halteelemente für den Lackiervorgang vorteilhaft verwendet werden.

Vorteilhafte Varianten für das Zusammenfügen von Blende und Grundkörper bestehen in einer lösbaren Verbindung, wie beispielsweise einer Verrastung, oder auch einer dauerhaften Verbindung, wie beispielsweise einer Klebeverbindung, einer Schweißverbindung oder einer Pressung.

Nachfolgend wird die Erfindung anhand der Zeichnung exemplarisch erläutert.

Es zeigen:
- Figur 1: eine nicht erfindungsgemäße Variante, bei der das Anbauteil als Dachfugenleiste ausgebildet ist; und
- Figur 2: eine erfindungsgemäße Ausführungsform der Erfindung, bei der das erfindungsgemäße Anbauteil als Wasserfangleiste für den Bereich der A-Säule eines Kraftfahrzeuges ausgebildet ist.

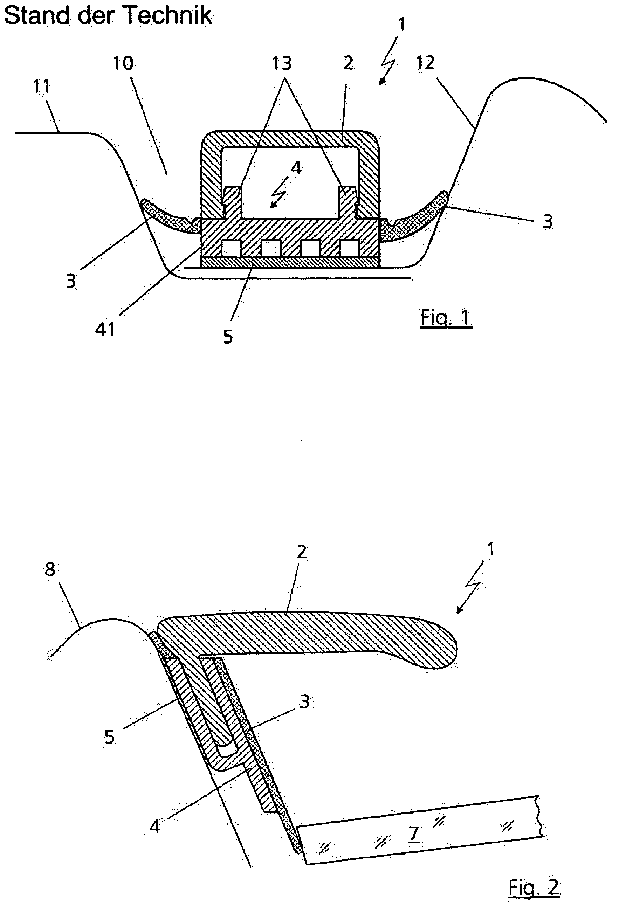

Figur 1 zeigt das als Dachfugenleiste ausgebildete Anbauteil 1, das in der Dachfuge 10 zwischen dem Dach 11 und der Fahrzeugseitenwand 12 mittels eines Klebebandes 5 fixiert ist. Alternativ kann aber auch eine Verrastung mit einem entsprechenden Aufnehmer auf dem Dach 11 vorgesehen sein. Die Blende 2 des Anbauteils 1 ist dabei als lackierbare Abdeckschiene 2 ausgeführt, die aus einem einkomponentigen Material beispielsweise durch ein Spritzgießverfahren hergestellt ist. Die Abdeckschiene 2 ist mittels der Rasten 13 auf dem Grundkörper 4 verrastet. Der Grundkörper 4 besteht aus den Dichtlippen 3 sowie der starren Komponente 41, wobei die Dichtlippe 3 und die starre Komponente 41 im Zuge z. B. eines Spritzgießvorgangs miteinander hergestellt worden sind. Der Grundkörper 4 übernimmt die Funktion, die Abdeckschiene 2 zu haltern und daneben die Dichtlippen 3 gegenüber den Fahrzeugkomponenten Dach 11 und Seitenwand 12 zu positionieren. Die Dichtlippen 3 dienen einerseits dem Toleranzausgleich zwischen Dach 11 und Seitenwand 12 und daneben der Abdichtung der Fahrzeugkarosserie im Bereich des Aufeinandertreffens von Dach 11 und Seitenwand 12. Im vorliegenden Beispiel hat die Blende 2 eine reine Designfunktion. Sie dient lediglich dazu, den Grundkörper 4 und die an ihm befindlichen Funktionsbauteile, wie beispielsweise die starre Komponente 41, vor dem Auge des Betrachters zu verbergen und das optische Erscheinungsbild des mit dem Anbauteil 1 ausgestatteten Fahrzeugs zu verbessern. Dabei sind alle technischen Funktionen des Anbauteils 1 im Grundkörper 4 zusammengefasst.

Figur 2 zeigt eine erfindungsgemäße Ausführungsform der Erfindung, bei der das Anbauteil 1 als Wasserfangleiste im Bereich einer A-Säule 8 und einer Windschutzscheibe 7 eines Fahrzeugs ausgeführt ist. Die Wasserfangleiste 1 besteht dabei aus der lackierbaren bzw. lackierten Abdeckleiste 2 sowie dem Grundkörper 4, der als Halteleiste 4 mit Dichtlippen 3 ausgebildet ist. Die Dichtlippen 3 dienen auch in diesem Beispiel dem Toleranzausgleich und der Abdichtung zwischen Grundkörper 4 und Windschutzscheibe 7 bzw. A-Säule 8. Der Grundkörper 4 ist im vorliegenden Beispiel ebenfalls mit Klebeband 5 an der A-Säule 8 fixiert. In die Ausnehmung des H-förmigen Grundkörpers 4 ist die Abdeckleiste 2, die im Wesentlichen L-förmig ausgebildet ist, mit ihrem kürzeren Fortsatz eingeklemmt. Im vorliegenden Beispiel hat die Abdeckleiste 2 neben ihrer Designfunktion noch die zusätzliche Funktionalität, zusammen mit dem Randbereich der Windschutzscheibe 7 und der Dichtlippe 3, die in Kontakt mit der Windschutzscheibe 7 steht, einen Wasserkanal zur Ableitung anfallenden Regen- oder Spritzwassers in Richtung des Daches des Fahrzeugs auszubilden. Damit hat die Abdeckleiste 2 im vorliegenden Fall über ihre reine Designfunktionalität hinaus noch eine technische Funktion, soweit diese mit der Designvorgabe vereinbar ist.

## Patentansprüche

1. Wasserfangleiste (1) zur Befestigung im Außenbereich von Fahrzeugen, wobei die Wasserfangleiste (1) zweiteilig aus einem Grundkörper (4) in Form einer Halteleiste (4) und einer an dem Grundkörper (4) befestigten Blende (2) in Form einer Abdeckleiste (2) ausgeführt ist und der Grundkörper (4) eine Ausnehmung zum Aufnehmen, insbesondere Einklemmen der Blende (2) und mindestens eine starre (4) und mindestens eine elastische (3) Komponente aufweist, wobei die elastische Komponente (3) als Dichtlippe ausgebildet ist,
**dadurch gekennzeichnet, dass**
der Grundkörper (4) h-förmig ausgebildet ist, dass in die Ausnehmung des Grundkörpers (4) die Abdeckleiste (2), die im Wesentlichen L-förmig ausgebildet ist, mit ihrem kürzeren Fortsatz eingeklemmt ist und die Dichtlippe (3) dem Toleranzausgleich und der Abdichtung zwischen dem Grundkörper (4) und einer Windschutzscheibe (7) eines Kraftfahrzeugs dient.

2. Wasserfangleiste (1) nach Anspruch 1, **dadurch gekennzeichnet, dass** der Grundkörper (4) eine weitere Dichtlippe aufweist und die weitere Dichtlippe dem Toleranzausgleich und der Abdichtung zwischen dem Grundkörper (4) und einer A-Säule (8) des Kraftfahrzeugs dient.

3. Wasserfangleiste (1) nach Anspruch 1 oder 2, **dadurch gekennzeichnet, dass** die starre Komponente (4) aus einem polymeren Material gebildet ist.

4. Wasserfangleiste (1) nach Anspruch 3, **dadurch gekennzeichnet, dass** das polymere Material Fasern, insbesondere Glasfasern, enthält.

5. Wasserfangleiste (1) nach einem der vorangehenden Ansprüche, **dadurch gekennzeichnet, dass** der Grundkörper (4) derart ausgebildet ist, dass er mit dem Fahrzeug verklebt oder verrastet werden kann.

6. Wasserfangleiste (1) nach einem der vorangehenden Ansprüche, **dadurch gekennzeichnet, dass** die Blende (2) als lackiertes oder anderweitig veredeltes Teil ausgeführt ist.

7. Wasserfangleiste (1) nach Anspruch 6, **dadurch gekennzeichnet, dass** die Blende (2) mit Halteelementen zur Halterung während eines Lackiervorganges versehen ist.

8. Wasserfangleiste (1) nach einem der Ansprüche 1 bis 7, **dadurch gekennzeichnet, dass** die Blende (2) mittels eines Folienhinterspritzverfahrens hergestellt ist.

9. Wasserfangleiste (1) nach einem der vorangehenden Ansprüche, **dadurch gekennzeichnet, dass** die Blende (2) lösbar oder unlösbar an dem Grundkörper (4) befestigt ist.

## Claims

1. Water-catching strip (1) for fastening in the external region of vehicles, wherein the water-catching strip (1) has a two-part design consisting of a base body (4), in the form of a retaining strip (4), and a cover (2), in the form of a cover strip (2) fastened to the base body (4), and the base body (4) comprises a recess for accommodating, in particular for clamping into place, the cover (2), and at least one rigid component (4) and at least one elastic component (3), wherein the elastic component (3) is designed as a sealing lip,
**characterized in that**
the base body (4) is of h-shaped design, **in that** the cover strip (2), which is of substantially L-shaped design, is clamped by its shorter projection into the recess in the base body (4), and the sealing lip (3) serves to compensate for tolerances and to provide sealing between the base body (4) and a windscreen (7) of a motor vehicle.

2. Water-catching strip (1) according to Claim 1, **characterized in that** the base body (4) comprises a further sealing lip, and the further sealing lip serves to compensate for tolerances and to provide sealing between the base body (4) and an A-pillar (8) of the motor vehicle.

3. Water-catching strip (1) according to Claim 1 or 2, **characterized in that** the rigid component (4) is formed of a polymer material.

4. Water-catching strip (1) according to Claim 3, **characterized in that** the polymer material contains fibres, in particular glass fibres.

5. Water-catching strip (1) according to one of the preceding claims, **characterized in that** the base body (4) is designed in such a way that it can be adhesively bonded to or snap-fastened with the vehicle.

6. Water-catching strip (1) according to one of the preceding claims, **characterized in that** the cover (2) is designed as a painted or otherwise refined part.

7. Water-catching strip (1) according to Claim 6, **characterized in that** the cover (2) is provided with retaining elements for retaining it during a painting operation.

8. Water-catching strip (1) according to one of Claims 1 to 7, **characterized in that** the cover (2) is produced by means of a film back-moulding process.

9. Water-catching strip (1) according to one of the preceding claims, **characterized in that** the cover (2) is detachably or non-detachably fastened to the base body (4).

## Revendications

1. Moulure de collecte d'eau (1) devant être fixée dans la région extérieure de véhicules, la moulure de collecte d'eau (1) étant réalisée en deux parties à partir d'un corps de base (4) en forme de baguette de fixation (4) et d'un bandeau (2) fixé sur le corps de base (4) en forme de baguette de recouvrement (2), et le corps de base (4) présentant un évidement pour recevoir, notamment par serrage, le bandeau (2) et au moins un composant rigide (4) et au moins un composant élastique (3), le composant élastique (3) étant réalisé sous forme de lèvre d'étanchéité,
**caractérisée en ce que**
le corps de base (4) est réalisé en forme de h, **en ce que** la baguette de recouvrement (2), qui est réalisée sensiblement en forme de L, est serrée avec sa partie saillante plus courte dans l'évidement du corps de base (4), et la lèvre d'étanchéité (3) sert à compenser les tolérances et à réaliser l'étanchéité entre le corps de base (4) et un pare-brise (7) d'un véhicule automobile.

2. Moulure de collecte d'eau (1) selon la revendication 1, **caractérisée en ce que** le corps de base (4) présente une autre lèvre d'étanchéité et l'autre lèvre d'étanchéité sert à compenser les tolérances et à réaliser l'étanchéité entre le corps de base (4) et une colonne A (8) du véhicule automobile.

3. Moulure de collecte d'eau (1) selon la revendication 1 ou 2, **caractérisée en ce que** le composant rigide (4) est formé d'un matériau polymère.

4. Moulure de collecte d'eau (1) selon la revendication 3, **caractérisée en ce que** le matériau polymère contient des fibres, notamment des fibres de verre.

5. Moulure de collecte d'eau (1) selon l'une quelconque des revendications précédentes, **caractérisée en ce que** le corps de base (4) est réalisé de telle sorte qu'il puisse être collé ou encliqueté avec le véhicule.

6. Moulure de collecte d'eau (1) selon l'une quelconque des revendications précédentes, **caractérisée en ce que** le bandeau (2) est réalisé sous forme de pièce laquée ou mise en valeur d'une autre manière.

7. Moulure de collecte d'eau (1) selon la revendication 6, **caractérisée en ce que** le bandeau (2) est pourvu d'éléments de retenue pour sa fixation pendant une opération de laquage.

8. Moulure de collecte d'eau (1) selon l'une quelconque des revendications 1 à 7, **caractérisée en ce que** le bandeau (2) est fabriqué par un procédé de surmoulage de feuille par injection.

9. Moulure de collecte d'eau (1) selon l'une quelconque des revendications précédentes, **caractérisée en ce que** le bandeau (2) est fixé de manière amovible ou indesserrable sur le corps de base (4).
